# EUROPEAN PATENT SPECIFICATION

(11) **EP 1 892 139 B1**
(45) Date of publication and mention of the grant of the patent: **07.01.2009**
(21) Application number: 07016243.3
(22) Date of filing: 20.08.2007
(51) Int. Cl.: B60K 17/10, B60K 17/356

(54) **Hydrostatic transmission system**
Hydrostatisches Getriebesystem
Système de transmission hydrostatique

(30) Priority: 21.08.2006 JP 2006224741
(43) Date of publication of application: 27.02.2008
(73) Proprietor: KANZAKI KOKYUKOKI MFG. CO., LTD., Amagasaki-shi, Hyogo (JP)
(72) Inventor: Kanenobu, Hideki, Amagasaki-shi, Hyogo (JP); Sakakura, Shinya, Amagasaki-shi, Hyogo (JP)
(74) Representative: Jostarndt, Hans-Dieter

(56) References cited:
- JP-A- 9 156 389
- US-A1- 2005 039 451
- US-A1- 2005 070 390

## Description

### BACKGROUND OF THE INVENTION

### Field of the Invention

The present invention relates to a hydrostatic transmission apparatus for driving a vehicle, especially for a four-wheel drive vehicle.

### Related Art

As disclosed in JP No. H09-156389 A, which shows the preamble of claims, there is a well-known conventional hydrostatic transmission apparatus for vehicles. The hydrostatic transmission apparatus includes a housing which incorporates a hydraulic pump, a hydraulic motor and a closed fluid circuit connected between the hydraulic pump and motor. The closed fluid circuit includes a pair of fluid passages interposed between the hydraulic pump and motor. The pair of fluid passages are provided with respective charge check valves. When one of the fluid passages is hydraulically depressed, the corresponding charge check valve is opened to supply fluid to the hydraulically depressed fluid passage. Further, the pair of charge check valves are provided with respective manually operable pushpins, which are adapted to be simultaneously pressed to simultaneously and forcibly open both the charge check valves so as to allow fluid to bypass the hydraulic pump from the higher-pressurized fluid passage to the lower-pressurized fluid passage, thereby allowing the hydraulic motor to freely rotate when a vehicle is towed, for instance.

Further, there is a well-known conventional four-wheel drive vehicle including a first hydraulic motor for driving rear wheels and a second hydraulic motor for driving front wheels, wherein a closed fluid circuit fluidly connects the first and second hydraulic motors in series to a common hydraulic pump. The closed fluid circuit includes a first fluid passage interposed between the hydraulic pump and the first hydraulic motor, a second fluid passage interposed between the hydraulic pump and the second hydraulic motor, and a third fluid passage interposed between the first and second hydraulic motors. A pair of charge check valves are connected to the respective first and second fluid passages.

However, in the conventional hydrostatic transmission system for a four-wheel drive vehicle, even if the pair of charge check valves are provided with means for simultaneously and forcibly opening the charge check valves, and the charge check valves are simultaneously opened to allow fluid to bypass the hydraulic pump between the first and second fluid passages, pressure fluid in the third fluid passage cannot easily flow into either the first or second fluid passage through the resistant first or second hydraulic motor. Consequently, the pair of charge check valves connected to the respective first and second fluid passages insufficiently bypass fluid to allow the first and second hydraulic motors to freely rotate, thereby requiring a large force for towing the vehicle.

### SUMMARY OF THE INVENTION

An object of the invention is to provide a hydrostatic transmission apparatus for driving a vehicle, especially for a four-wheel drive vehicle, including a hydraulic pump and a first hydraulic motor for driving an axle, to be fluidly connected to a second hydraulic motor for driving another axle, wherein a closed fluid circuit fluidly connects the first and second hydraulic motors in series to the hydraulic pump, and the hydrostatic transmission apparatus is improved for efficiently bypassing fluid so as to ensure free rotatability of the first and second hydraulic motors when the vehicle is towed.

To achieve the object, according to the invention, a hydrostatic transmission apparatus comprises: a housing; a hydraulic pump disposed in the housing so as to be driven by a prime mover; a first hydraulic motor disposed in the housing; a first port provided on the housing and opened outward from the housing; a first fluid passage disposed in the housing and interposed between the hydraulic pump and the first hydraulic motor; a second port provided on the housing and opened outward from the housing; a second fluid passage disposed in the housing and extended from the hydraulic pump to the first port, wherein the first and second ports are adapted to be fluidly connected to a second hydraulic motor disposed outside of the housing so as to constitute a closed fluid circuit fluidly connecting the first and second hydraulic motors in series to the hydraulic pump; a third fluid passage disposed in the housing and extended from the first hydraulic motor to the second port; a first bypass means for allowing fluid to bypass the hydraulic pump between the first and second fluid passages; and a second bypass means for allowing fluid to bypass the first hydraulic motor between the first and third fluid passages.

Therefore, when the first and second bypass means are simultaneously operated to allow fluid to bypass the hydraulic pump between the first and second fluid passages and to allow fluid to bypass the first hydraulic motor between the first and third fluid passages, both the first and second hydraulic motors become sufficiently rotatable, which is convenient for towing of a vehicle equipped with the hydrostatic transmission apparatus.

Preferably, the hydrostatic transmission apparatus further comprises a first axle driven by the first hydraulic motor. A second axle is disposed outside of the housing, and the second hydraulic motor is adapted to drive the second axle. Therefore, when a vehicle including the first and second axles is equipped with the hydrostatic transmission apparatus, due to the above-mentioned simultaneous operation of the first and second bypass means, the first and second axles can be sufficiently freely rotated during towing of the vehicle.

Preferably, the first bypass means includes a check valve for allowing fluid to be charged to the closed fluid circuit, and for allowing fluid to bypass the hydraulic pump between the first and second fluid passages. Therefore, the check valve which is normally disposed to serve as a charge check valve for supplying fluid to the closed fluid circuit can be also provided as the first bypass means, thereby requiring no additional member, reducing costs and minimizing the hydrostatic transmission apparatus.

Alternatively, preferably, the first bypass means includes a first bypass-passage interposed between the first and second fluid passages so as to bypass the hydraulic pump, and includes a first switching valve for selectively opening or closing the first bypass-passage. The second bypass means includes a second bypass-passage interposed between the first and third fluid passages so as to bypass the first hydraulic motor, and includes a second switching valve for selectively opening or closing the second bypass-passage. Therefore, the first and second bypass means can be simple and inexpensive.

Preferably, at least one of the first and second bypass means can drain bypassed fluid to a fluid sump in the housing. Therefore, even if gas is caused by cavitation and is accumulated in the closed fluid circuit, the gas can be released into the fluid sump, thereby preventing the hydraulic power transmission efficiency of the closed fluid circuit from being reduced by the gas.

Preferably, a single bypass unit is disposed in the housing, and the first and second bypass means are assembled together in the single bypass unit so as to be simultaneously switched for allowing fluid to bypass the hydraulic pump between the first and second fluid passages and bypass the first hydraulic motor between the first and third fluid passages. Therefore, the number of parts is reduced and the hydrostatic transmission apparatus is simplified and compacted.

These, other and further objects, features and advantages of the invention will appear more fully from the following description with reference to accompanying drawings.

### BRIEF DESCRIPTION OF THE DRAWINGS

Fig. 1 is a side view partly in section of a four-wheel drive lawn tractor serving as a working vehicle equipped with a hydrostatic transmission apparatus serving as a rear transaxle.

Fig. 2 is a sectional front view of a first hydrostatic transmission apparatus.

Fig. 3(a) is a diagram of a first hydraulic circuit including the first hydrostatic transmission apparatus, serving as the rear transaxle, fluidly connected to a first type front transaxle including twin hydraulic motors, and Fig. 3(b) is a hydraulic circuit diagram of a second type front transaxle including a single hydraulic motor and a mechanical differential unit, when the second type front transaxle is adapted to the first hydraulic circuit.

Fig. 4 is a sectional front view of a second hydrostatic transmission apparatus.

Fig. 5 is a sectional side view of the second hydrostatic transmission apparatus.

Fig. 6(a) is a diagram of a second hydraulic circuit including the second hydrostatic transmission apparatus, serving as the rear transaxle, fluidly connected to the first type front transaxle, and Fig. 6(b) is a hydraulic circuit diagram of the second type front transaxle, when the second type front transaxle is adapted to the second hydraulic circuit.

Fig. 7 is a sectional front view of a third hydrostatic transmission apparatus.

Fig. 8 is an enlarged sectional front view of the third hydrostatic transmission apparatus.

Fig. 9(a) is a diagram of a third hydraulic circuit including the third hydrostatic transmission apparatus, serving as the rear transaxle, fluidly connected to the first type front transaxle, and Fig. 9(b) is a hydraulic circuit diagram of the second type front transaxle, when the second type front transaxle is adapted to the third hydraulic circuit.

Fig. 10 is a sectional front view of a fourth hydrostatic transmission apparatus.

Fig. 11 is a sectional side view of the fourth hydrostatic transmission apparatus.

Fig. 12 is an enlarged sectional side view of the fourth hydrostatic transmission apparatus.

Fig. 13 is a cross sectional view taken along an A-A line of Fig. 12.

Fig. 14(a) is a diagram of a fourth hydraulic circuit including the fourth hydrostatic transmission apparatus, serving as the rear transaxle, fluidly connected to the first type front transaxle, and Fig. 14(b) is a hydraulic circuit diagram of the second type front transaxle, when the second type front transaxle is adapted to the fourth hydraulic circuit.

Fig. 15 is a diagram of a fifth hydraulic circuit including a fifth hydrostatic transmission apparatus.

### DETAILED DESCRIPTION OF THE INVENTION

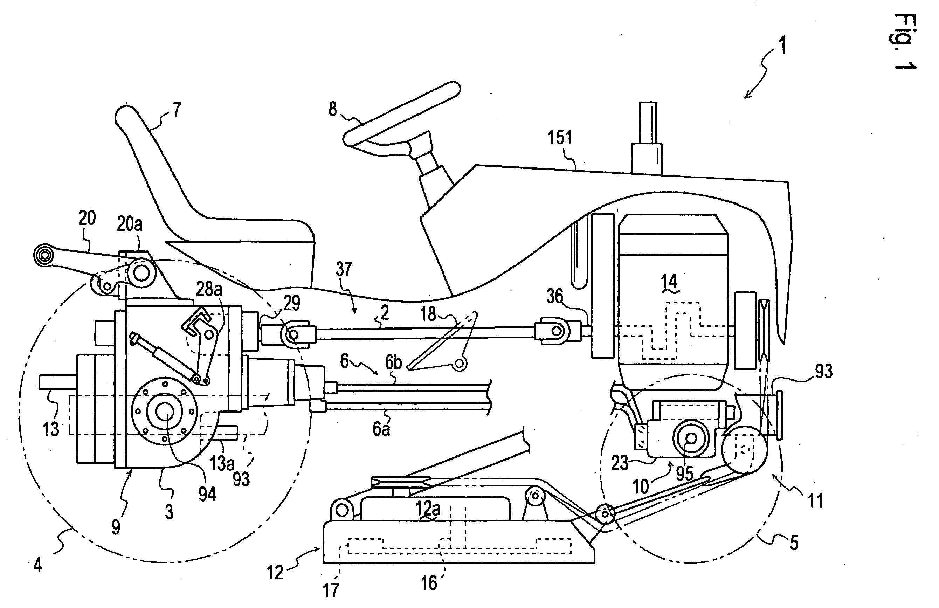

An entire structure of a lawn tractor 1 (hereinafter, simply referred to as "vehicle 1") serving as a four-wheel working vehicle equipped with a rear transaxle 9 and a front transaxle 10 will be described with reference to Fig. 1. Vehicle 1 has a vehicle frame 93. An engine 14 serving as a prime mover is mounted on a front portion of vehicle frame 93, and rear transaxle 9 is supported by a rear portion of vehicle frame 93 between left and right rear wheels 4. Rear transaxle 9 has a casing 3 incorporating later-discussed hydraulic pump and motor so as to serve as a hydrostatic transmission apparatus. Engine 14 has a rearward projecting horizontal output shaft 36, rear transaxle 9 has a forward projecting horizontal input shaft 29, and a power transmission linkage 37 is interposed between engine 14 and rear transaxle 9 so as to transmit power from engine 14 to rear transaxle 9. Power transmission linkage 37 includes a propeller shaft 2 connected between output shaft 36 and input shaft 29 via universal joints. Front transaxle 10, having steerable front wheels 5, is supported by the front portion of vehicle frame 93 under engine 14.

A bonnet 151 covers engine 14. A front column is mounted upright at a rear end portion of bonnet 151 and a steering wheel 8 is extended rearwardly upward from the front column. A speed-shift pedal 18 is disposed at a bottom portion of the front column, and is operatively to a speed-shift arm 28a pivoted on casing 3 of rear transaxle 9 so as to control a later-discussed movable swash plate 28 of a hydraulic pump 21 in rear transaxle 9. The forward/backward traveling direction of vehicle 1 is determined by the depression direction of pedal 18, and the traveling speed of vehicle 1 is determined by the depression degree of pedal 18. An operator's seat 7 is mounted on vehicle 1 behind steering wheel 8 and speed-shift pedal 18. A mid-mount mower 12 is disposed between front wheels 5 and rear wheels 4 below vehicle frame 93. Mower 12 includes a gearbox 12a, and a mower-driving transmission 11 (such as a belt transmission) is interposed between engine 14 and gearbox 12a so as to transmit power of engine 14 to rotate a rotary shaft 16 with rotary blade (blades) 17 in mower 12.

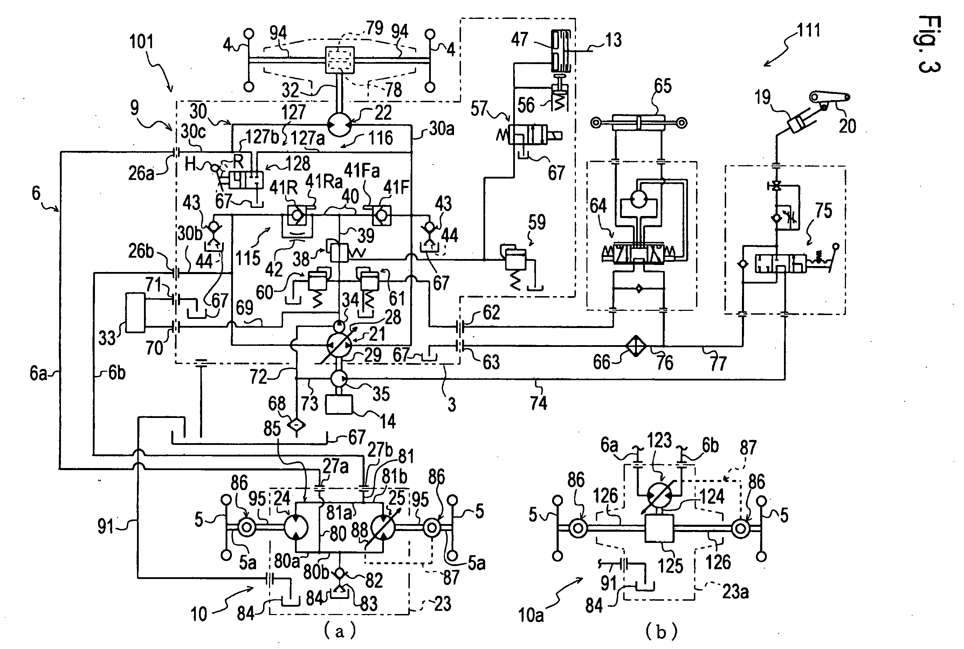

A pair of left and right lift arms 20 for lifting up and down a rear-mount working machine, e.g., a rotary cultivator, are pivoted on a lift arm bracket 20a fixed on a top surface of casing 3 of rear transaxle 9. A hydraulic lift cylinder 19 (see Fig. 3) is connected at a head of a piston rod thereof to lift arms 20, and is adapted to be telescoped so as to rotate upward or downward the pair of left and right lift arms 20. A horizontal rear PTO shaft 13 projects rearward from casing 3 of rear transaxle 9 so as to be drivingly connected to the rear-mount working machine. A horizontal mid PTO shaft 13a projects forward from casing 3 of rear transaxle 9 so as to be drivingly connected to another working machine.

A first hydraulic circuit 111 of vehicle 1, including a first hydrostatic transmission apparatus 101 serving as rear transaxle 9, will be described with reference to Figs. 1 and 3. As shown in Figs. 1 and 3(a), a hydraulic pump 21 and a rear hydraulic motor 22 are disposed in casing 3 of rear transaxle 9. Rear hydraulic motor 22 is provided for driving rear wheels 4. Front transaxle 10 includes a casing 23. A pair of front hydraulic motors 24 and 25 are disposed in casing 23 of front transaxle 10 so as to drive respective left and right front wheels 5.

Hydraulic pump 21 is variable in displacement, and hydraulic motor 22 is fixed in displacement. A main fluid passage section 30, including first, second and third fluid passages 30a, 30b and 30c, is configured in casing 3 of rear transaxle 9. Ports 26a and 26b are provided on casing 3 and opened outward from casing 3. First fluid passage 30a is directly connected between hydraulic pump 21 and rear hydraulic motor 22. Second fluid passage 30b is extended from hydraulic pump 21 to port 26b. Third fluid passage 30c is extended from rear hydraulic motor 22 to port 26a.

Ports 27a and 27b are provided on casing 23 of front transaxle 10 and opened outward from casing 23. In casing 23, an auxiliary fluid passage section 85 passing parallel-lined front hydraulic motors 24 and 25 is interposed between ports 27a and 27b. Auxiliary fluid passage section 85 includes fluid passages 80 and 81. In this regard, in casing 23, passage 80 is extended from port 27a and bifurcated into parallel passages 80a and 80b connected to one-side ports of respective hydraulic motors 24 and 25. Further, in casing 23, passage 81 is extended from port 27b and bifurcated into parallel passages 81 a and 81 b connected to the opposite side ports of respective hydraulic motors 24 and 25.

A connection fluid passage section 6 is interposed between rear and front transaxles 9 and 10. Connection fluid passage section 6 includes a fluid pipe 6a interposed between ports 26a and 27a, and includes a fluid pipe 6b interposed between ports 26b and 27b.

In this way, main fluid passage section 30 in rear transaxle 9 and auxiliary fluid passage section 85 in front transaxle 10 are fluidly connected to each other through connection fluid passage section 6 interposed between rear and front transaxles 9 and 10, thereby constituting a closed fluid circuit fluidly connecting rear hydraulic motor 22 and the pair of front hydraulic motors 24 and 25 in series to hydraulic pump 21 so as to drive rear wheels 4 and front wheels 5.

The closed fluid circuit for driving rear and front wheels 4 and 5 is configured so that, when vehicle 1 travels forward, the delivery port of hydraulic pump 21 is opened to first fluid passage 30a so as to supply fluid to rear hydraulic motor 22 through first fluid passage 30a prior to the pair of front hydraulic motors 24 and 25, and that, when vehicle 1 travels rearward, the delivery port of hydraulic pump 21 is opened to second fluid passage 30b so as to supply fluid to the pair of front hydraulic motors 24 and 25 through second fluid passage 30b prior to rear hydraulic motor 22.

In this regard, in rear transaxle 9, hydraulic pump 21 is provided with a movable swash plate 28 operatively connected to speed-shift pedal 18. The depression degree of speed-shift pedal 18 determines the tilt angle of movable swash plate 28 so as to determine the delivery quantity of fluid from hydraulic pump 21. The depression direction of speed-shift pedal 18 determines the tilt direction of movable swash plate 28 from its neutral position so as to determine whether hydraulic pump 21 delivers fluid to first fluid passage 30a or second fluid passage 30b.

Rear transaxle 9 includes a power transmission mechanism, i.e., a deceleration gear train 78 and a differential unit 79, for transmitting power from hydraulic motor 22 to front wheels 4. In this regard, a motor shaft 32 is extended from rear hydraulic motor 22 to deceleration gear train 78 so as to be drivingly connected to differential unit 79 through deceleration gear train 78. Left and right axles 94 are provided on outer ends thereof with respective rear wheels 4, and are differentially connected to each other through differential unit 79.

A fluid supply system for supplying fluid to the closed fluid circuit will be described. Rear transaxle 9 includes a charge pump 34 and a supplemental pump 35, both of which are driven together hydraulic pump 21 by input shaft 29 driven by engine 14. Charge pump 34 sucks fluid through a fluid filter 68 and a fluid passage 72 from a fluid sump 67 provided in casing 3. A fluid passage 73 is branched from fluid passage 72 and is extended to supplemental pump 35.

Fluid is delivered from charge pump 34 to charge check valves 41 F and 41 R through a charge fluid passage 39 and a decompression valve 38 on charge fluid passage 39. At the upstream side of decompression valve 38, a fluid passage is branched through a resistance valve 61 from a portion of charge fluid passage 39, and extended to an outwardly opened port 62 provided on casing 3. A pressure regulating valve 60 regulates a pressure of fluid in charge fluid passage 39 at the upstream side of decompression valve 38. Further, at the upstream side of the point on charge fluid passage 39 branched to valves 60 and 61, a power take-off fluid passage 69 is branched from charge fluid passage 39 and is extended to an outwardly opened port 70 provided on casing 3.

Fluid extracted from port 70 is supplied to an external hydraulic implement 33, and is returned to fluid sump 67 through an outwardly opened port 71 provided on casing 3. Fluid extracted from port 62 is supplied to a power steering cylinder 65 for steering steerable front wheels 5 through a steering control valve 64, and is returned to fluid sump 67 through an external fluid passage 76, a fluid cooler 66 and an outwardly opened port 63 provided on casing 3. Supplemental pump 35 delivers fluid to lift cylinder 19 for lifting up and down lift arms 20 through an external fluid passage 74 and a lift control valve 75. Fluid drained from lift control valve 75 is joined to fluid in fluid passage 76 through an external fluid passage 77 so as to be returned to fluid sump 67 in casing 3 of rear transaxle 9 through port 63.

In casing 3 of rear transaxle 9, charge fluid passage 39 bifurcates into passages 40 connected to respective charge check valves 41 F and 41 R. Charge check valve 41 F is connected to first fluid passage 30a, and charge check valve 41 R to second fluid passage 30b. When one of fluid passages 30a and 30b is hydraulically depressed, the corresponding charge check valve 41 F or 41 R is opened to supply fluid from charge pump 34 to the depressed fluid passage 30a or 30b, thereby supplying fluid to the closed fluid circuit.

Further, each of fluid passages 30a and 30b is connected to a check valve 43 which is adapted to be opened to supply fluid from fluid sump 67 through a fluid filter 44. When vehicle 1 stays on a slope and engine 14 is stationary, even if fluid leaks from the closed fluid circuit through hydraulic pump 21, motor 22 or so on, stationary engine 14 cannot drive charge pump 34. Therefore, in this situation, check valve 43 is opened because of the reduction of fluid in the closed fluid circuit caused by the fluid leak, thereby compensating fluid in the closed fluid circuit.

Further, a part of the fluid is branched from charge fluid passage 39 through decompression valve 38 so as to supplied through a PTO clutch valve 57 to a hydraulic PTO clutch 47 interposed between input shaft 29 and rear PTO shaft 13 (and mid PTO shaft 13a). The fluid is also adapted to be supplied to a PTO brake 56 for braking disengaged PTO clutch 47. When PTO clutch valve 57 is disposed at a clutch-off position as shown in Fig. 3(a), fluid is drained from PTO clutch 47 and PTO brake 56 to fluid sump 67, so that PTO clutch 47 is disengaged, and simultaneously PTO brake 56 is applied to brake PTO clutch 47 so as to prevent PTO shaft 13 (and PTO shaft 13a) from inertially rotating. When PTO clutch valve 57 is disposed at a clutch-on position, the part of the fluid from charge pump 34 is supplied to PTO clutch 47 and PTO brake 56, so that PTO clutch 47 is engaged, and simultaneously PTO brake 56 is released to allow PTO clutch 47 to rotate, thereby allowing PTO shaft 13 (and PTO shaft 13a) to rotate. A pressure of fluid branched from decompression valve 38 is regulated by a PTO regulating valve 59 at the upstream side of PTO clutch valve 57.

Further, an orifice 42 serving as a neutral valve bypasses charge check valve 41 R between corresponding fluid passage 40 and second fluid passage 30b. When second fluid passage 30b is pressurized higher than first fluid passage 30a and charge check valve 41 R is closed, orifice 42 allows fluid to flow from second fluid passage 30b to depressed first fluid passage 30a through fluid passages 40, thereby equalizing the pressures of first and second fluid passages 30a and 30b and surely stopping vehicle 1, i.e., expanding the neutral zone of hydraulic pump 21.

The pair of charge check valves 41 F and 41 R also serve as a first bypass means 115 for allowing fluid to bypass hydraulic pump 21 between first and second fluid passages 30a and 30b. Further, hydrostatic transmission apparatus 101 serving as rear transaxle 9 includes a second bypass means 116 for allowing fluid to bypass rear hydraulic motor 22 between first and third fluid passages 30a and 30c. First and second bypass means 115 and 116 of hydrostatic transmission apparatus 101 will be detailed later.

Front transaxle 10 will now be described with reference to Fig. 3(a). The main structure of the hydraulic fluid passage system including hydraulic motors 24 and 25 between ports 27a and 27b is mentioned as above. Since the pair of hydraulic motors 24 and 25 are fluidly connected in parallel to hydraulic pump 21, front wheels 5 are differentially rotatable so as to smoothen turning of vehicle 1. Left and right front wheels 5 have respective axles 5a which are drivingly and steerably connected to output shafts 95 of respective hydraulic motors 24 and 25 through respective left and right steerable wheel support units 86. Left and right steerable wheel support units 86 are operatively connected to steering wheel 8 through power steering cylinder 65, so as to be turned by rotating steering wheel 8, thereby turning front wheels 5.

Of the two motors 24 and 25, only hydraulic motor 25 has a variable displacement. Here, if the variable displacement of hydraulic motor 25 is reduced while the total fluid flow from hydraulic pump 21 is kept constant, fluid flow through the other hydraulic motor 24 is increased, thereby resulting in that the output rotations of hydraulic motors 24 and 25 are substantially evenly accelerated. Therefore, a movable swash plate 88 of hydraulic motor 25 is operatively connected to one of left and right steerable wheel support units 86 (preferably, on the same side with hydraulic motor 25) through a swash plate control linkage 87, so that, when vehicle 1 turns, movable swash plate 88 is controlled to reduce the displacement of hydraulic motor 25, so as to substantially evenly accelerate left and right front wheels 5, thereby preventing front wheels 5 from being dragged following rotation of rear wheels 4.

Incidentally, the above-mentioned acceleration of front wheels 5 during turning of vehicle 1 is liable to cause hydraulic motors 24 and 25 to receive backflowing driving power from front wheels 5 so as to act as pumps and to hydraulically depress their suction ports, thereby resulting in cavitation in the closed fluid circuit and hunting travel of vehicle 1. Therefore, in front transaxle 10, a check valve 82 is connected to one passage of auxiliary fluid passage section 85 so as to supply fluid to the passage from a fluid sump 84 in casing 23 through a fluid filter 83. Preferably, passage 80b, which serves as a suction port of variable displacement hydraulic motor 25 during forward travel of vehicle 1, is selected as the passage connected to check valve 82 so as to be efficiently compensated for its hydraulic depression.

Incidentally, preferably, vehicle 1 is set so that the peripheral speed of rear wheels 4 is higher than that of front wheels 5 during straight travel of vehicle 1, because, if rear wheels 4 and front wheels 5 were set to have equal peripheral speeds during straight travel of vehicle 1, rotation of front wheels 5 following rear wheels 4 and rotation of rear wheels 4 following front wheels 5 would be generated one after the other, so that vehicle 1 would travel in a state of instability. Due to the above setting, during straight travel of vehicle 1, front wheels 5 normally rotate following rear wheels 4. Even if rear wheels 4 are slowed down relative to the set output speed of hydraulic motor 22, the main case is that front wheels 5 still rotate following rear wheels 4, or front wheels 5 and rear wheels 4 rotate at equal peripheral speeds. In case that the peripheral speed of front wheels 5 exceeds that of rear wheels 4, the differential peripheral speed is too small to hinder vehicle 1 from smoothly traveling.

Incidentally, a pipe or another member serves as an external passage 91 interposed between fluid sump 67 in casing 3 of rear transaxle 9 and fluid sump 84 in front transaxle 10, so as to balance the fluid supply between fluid sumps 67 and 84.

Referring to Fig. 3(b), an alternative front transaxle 10a is adaptable to be connected to hydrostatic transmission apparatus 101 (and later-discussed hydrostatic transmission apparatuses 102, 103 and 104) serving as rear transaxle 9 through connection fluid passage section 6. Front transaxle 10a includes a casing 23a and includes only one front hydraulic motor 123 disposed in casing 23a to be supplied with fluid from hydraulic pump 21. In casing 23a, a mechanical differential unit (such as a differential gear unit) 125 is drivingly connected to a motor shaft 124 of front hydraulic motor 123, and differentially connects differential output shafts 126 to each other. Differential output shafts 126 are connected to axles 5a of front wheels 5 through steerable support units 86, respectively.

Pipes 6a and 6b of connection fluid passage section 6 are interposed between rear transaxle 9 and front transaxle 10a, so as to constitute an alternative closed fluid circuit fluidly connecting rear hydraulic motor 22 and front hydraulic motor 123 in series to hydraulic pump 21.

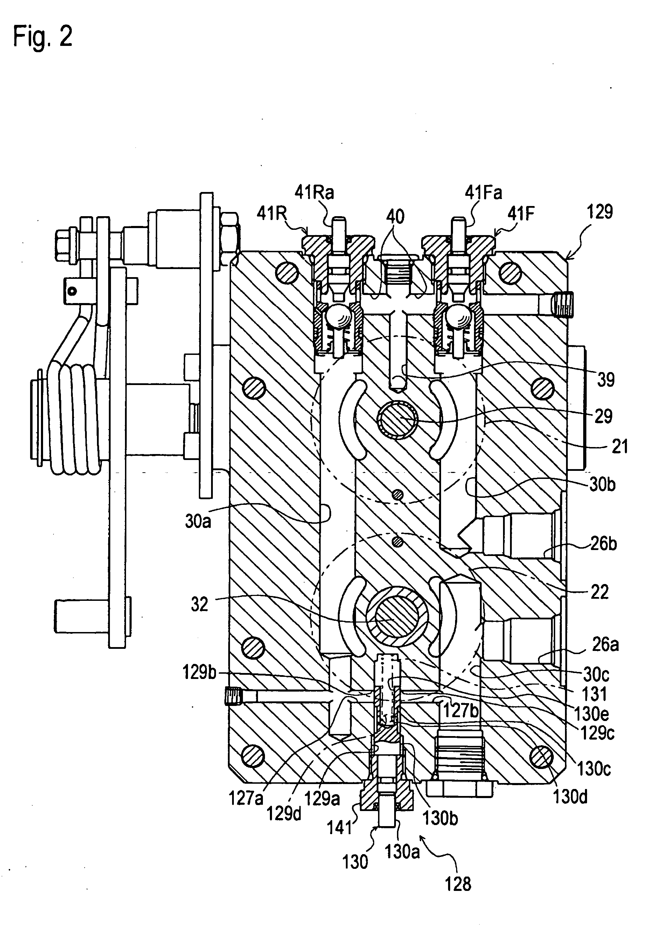

First and second bypass means 115 and 116 of first hydrostatic transmission apparatus 101 serving as rear transaxle 9 will be detailed with reference to Figs. 2 and 3. Previously, a center section 129 of first hydrostatic transmission apparatus 101 will be described with reference to Fig. 2, on the assumption that hydraulic pump 21 and motor 22 are mounted on center section 129 so that hydraulic pump 21 is disposed above rear hydraulic motor 22 so as to have parallel horizontal pump shaft (input shaft) 29 and motor shaft 32. In center section 129, a vertical duct is bored so as to serve as first fluid passage 30a, and upper and lower coaxial vertical ducts are bored laterally opposite to first fluid passage 30a so as to serve as upper second fluid passage 30b and lower third fluid passage 30c. Ports 26b and 26a are extended horizontally from respective fluid passages 30b and 30c and opened outward on a side surface of center section 129. A pair of kidney ports opened to hydraulic pump 21 are bored in center section 129, one is opened to first fluid passage 30a, and the other to second fluid passage 30b. A pair of kidney ports opened to hydraulic motor 22 are bored in center section 129, one is opened to first fluid passage 30a, and the other to third fluid passage 30c. Pump shaft 29 is rotatably supported in center section 129 between first fluid passage 30a and second fluid passage 30b, and motor shaft 32 is rotatably supported in center section 129 between first fluid passage 30a and third fluid passage 30c. Basically, later-discussed center sections 136, 144 and 152 have the same structure of fluid passages 30a, 30b and 30c.

Charge check valves 41 F and 41 R are fitted from a top surface of center section 129 into center section 129. A pair of pushpins 41 Fa and 41 Ra are provided to respective charge check valves 41 F and 41 R so as to project upward from the top surface of center section 129, thereby serving as first bypass means 115. A first bypass operation device (not shown) is operatively connected to pushpins 41 Fa and 41 Ra. Preferably, the first bypass operation device is provided on casing 3 of rear transaxle 9. Normally, the first bypass operation device is disposed at a normal position for pulling up pushpins 41 Fa and 41 Ra apart from respective charge check valves 41 F and 41 R, so that either charge check valve 41 F or 41 R is opened only when corresponding fluid passage 30a or 30b is hydraulically depressed. When vehicle 1 has to be towed, the first bypass operation device is operated to a bypass position so as to simultaneously push down pushpins 41 Fa and 41 Ra, thereby forcibly opening both charge check valves 41 F and 41 R. Thus, fluid is allowed to bypass hydraulic pump 21 between first and second fluid passages 30a and 30b through opened charge check valves 41 F and 41 R and fluid passages 40 between charge check valves 41 F and 41 R, thereby assisting free rotation of rear hydraulic motor 22 and front hydraulic motors 24 and 25, especially ensuring free rotation of rear hydraulic motor 22.

With respect to second bypass means 116, a bypass-passage 127 is interposed between first and third fluid passages 30a and 30c, and a bypass valve 128 is disposed on bypass-passage 127 so as to divide bypass-passage 127 into a bypass-passage 127a connected to first fluid passage 30a and a bypass-passage 127b connected to third fluid passage 30c. In this regard, a downwardly opened vertical valve hole 129a is bored in center section 129 and crosses bypass-passage 127 so as to have opposite side ports 129b and 129c opened to respective bypass-passages 127a and 127b. Further, a drain passage 129d is extended from valve hole 129a and opened outward from center section 129 to fluid sump 67.

The bottom opening of valve hole 129a is plugged by a screwed cap 141, and a vertically axial valve member 130 of bypass valve 128 is vertically slidably fitted into valve hole 129a through cap 141. A lower half portion of valve member 130 is formed as a pushpin 130a vertically slidably fitted in cap 141. An upper half portion of valve member 130 is formed as a spool 130b vertically slidably fitted in valve hole 129a above a top of cap 141. The top of cap 141 serves as a stopper for limiting the downward slide of spool 130b, i.e., valve member 130. An annular groove 130c is formed on an outer peripheral surface of spool 130b, and radial ports 130d are bored in spool 130b between a later-discussed axial recess 130e and annular groove 130c.

Spool 130b is a cylindrical part having upwardly opened axial recess 130e, and a compressed spring 131 is interposed between a ceiling surface of valve hole 129a and a bottom end of axial recess 130e of spool 130b, so as to bias valve member 130 to the downward limit position that serves as a closed-valve position H of bypass valve 128, where the outer peripheral surface of spool 130b above annular groove 130c closes ports 129b and 129c so as to separate bypass-passages 127a and 127b from each other.

When valve member 130 slides vertically upward against spring 131, a valve seat formed at the ceiling of valve hole 129a comes to abut against a top of spool 130b, or spring 131 is compressed to the minimum length, so as to define the upward limit position of valve member 130 that serves as an opened-valve position R of bypass valve 128, where annular groove 130c is opened to ports 129b and 129c so as to connect fluid passages 127a and 127b to each other through annular groove 130c, radial ports 130d and axial recess 130e. That is, bypass valve 128 is a switching valve for selectively opening or closing bypass-passage 127.

When valve member 130 is disposed at the downward limit position, pushpin 130a projects downward from cap 141. A second bypass operation device (not shown) is operatively connected to pushpin 130a. Preferably, the second bypass operation device is provided on casing 3 of rear transaxle 9. Normally, the second bypass operation device is disposed at a normal position for releasing pushpin 130a, thereby setting valve member 130 at the downward limit position, i.e., closed-valve position H of bypass valve 128. When vehicle 1 has to be towed, the second bypass operation device is operated to a bypass position so as to push up pushpin 130a, thereby forcibly setting valve member 130 to the upward limit position, i.e., opened-valve position R of bypass valve 128. Thus, fluid is allowed to bypass hydraulic motor 22 between first and third fluid passages 30a and 30c through bypass-passages 127a and 127b and opened bypass valve 128, thereby assisting free rotation of rear hydraulic motor 22 and front hydraulic motors 24 and 25, especially ensuring free rotation of front hydraulic motors 24 and 25.

Preferably, the first and second bypass operation devices are synchronously operable. Thus, first bypass means 115 and second bypass means 116 can be simultaneously operated so that fluid is simultaneously allowed to bypass hydraulic pump 21 between first and second fluid passages 30a and 30b and to bypass hydraulic motor 22 between first and third fluid passages 30a and 30c, thereby further smoothly ensuring free rotatability of hydraulic motors 22, 24 and 25 during towing of vehicle 1. The mechanism for simultaneously operating pushpins 41 Fa and 41 Ra with pushpin 130a can be simply and compactly configured because first and second bypass means 115 and 116 having pushpins 41 Fa, 41 Ra and 130a are concentrated in center section 129 in rear transaxle 9.

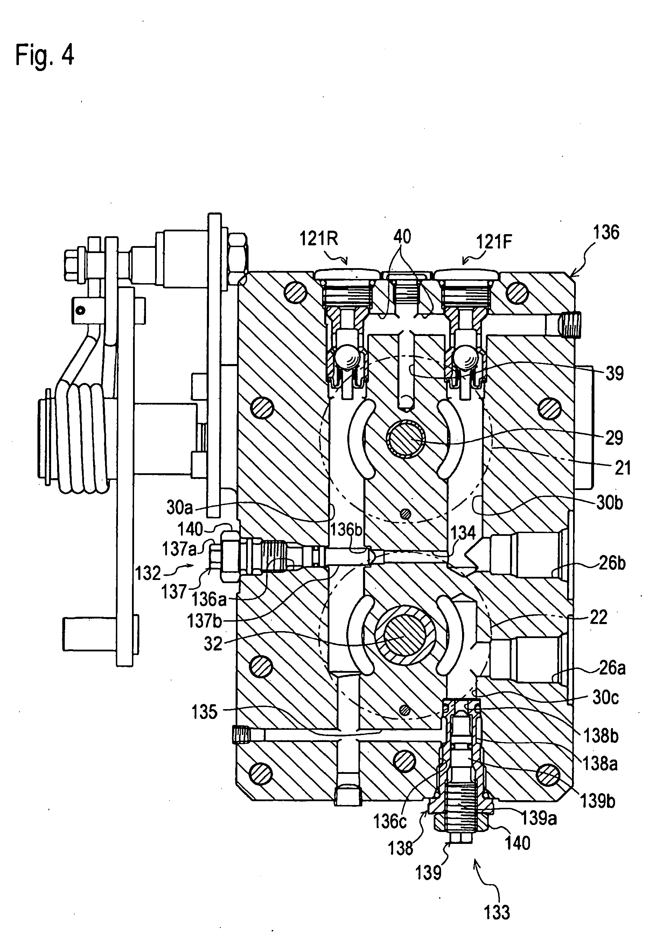

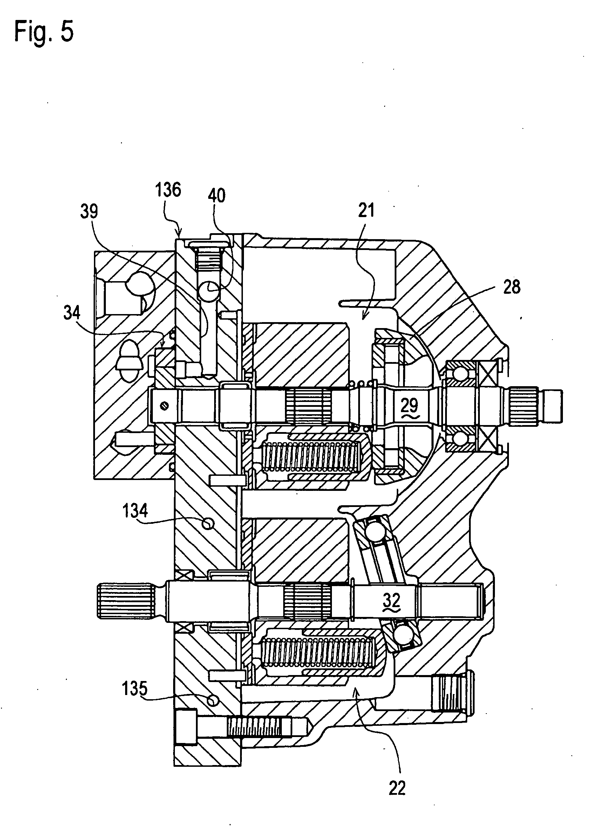

A second hydrostatic transmission apparatus 102 serving as rear transaxle 9 in vehicle 1 will be described with reference to Figs. 4 to 6. Description of the same members and parts designated by the same reference numerals as those of first hydrostatic transmission apparatus 101 is omitted. Only distinctive features of second hydrostatic transmission apparatus 102 from first hydrostatic transmission apparatus 101 will be described.

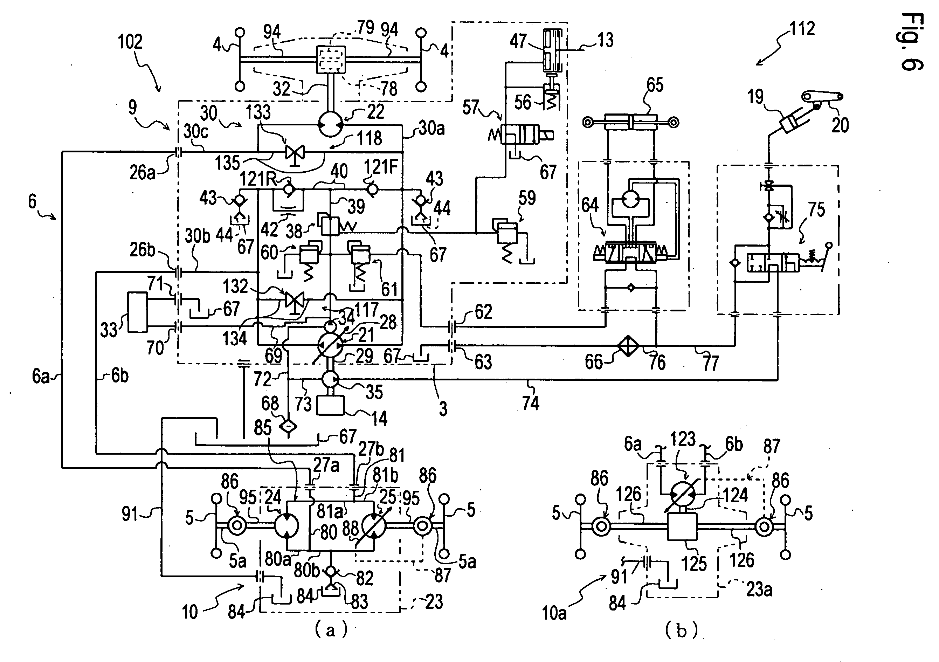

A different point of a second hydraulic circuit 112 shown in Fig. 6 from first hydraulic circuit 111 shown in Fig. 3 is first and second bypass means 117 and 118 in second hydrostatic transmission apparatus 102 serving as rear transaxle 9. Second hydrostatic transmission apparatus 102 serving as rear transaxle 9 is provided with an alternative center section 136. Charge check valves 121 F and 121 R are fitted into center section 136 so as to correspond to charge check valves 41 F and 41 R without pushpins 41 Fa and 41 Ra.

First bypass means 117 is separated from charge check valves 121 F and 121R. First bypass means 117 includes a bypass-passage 134 and a manual switching valve 132. A horizontal fluid hole serving as bypass-passage 134 is bored in a vertical middle portion of center section 136 between first and second fluid passages 30a and 30b. Switching valve 132 is interposed between first fluid passage 30a and bypass-passage 134. With respect to switching valve 132, a horizontal valve hole 136a is bored in center section 136 so as to extend from first fluid passage 30a opposite to bypass-passage 134, and is opened outward at a side surface of center section 136. A valve member 137 is screwed into valve hole 136a, and a nut 140 is screwed on an outer portion of valve member 137 projecting outward from the side surface of center section 136 so as to fasten valve member 137 to center section 136. An outer half portion of valve member 137 is threaded so as to serve as an operation portion 137a, and the remaining inner half portion of valve member 137 is horizontally extended so as to serve as a spool 137b. Operation portion 137a is screwed and fitted to a tapped inner peripheral surface of valve hole 136a. Spool 137b is extended to cross first fluid passage 30a. An opening between first fluid passage 30a and bypass-passage 134 serves as a port 136b provided with a valve seat to be fitted to a tip of spool 137b.

Normally, the tip of spool 137b is fitted to the valve seat of port 136b so as to close bypass-passage 134 from first fluid passage 30a, thereby closing switching valve 132. Nut 140 is screwed up to fasten valve member 137 to center section 136, so as to retain switching valve 132 at its closed-valve position.

When fluid has to bypass hydraulic pump 21 between first and second fluid passages 30a and 30b, nut 140 is loosened, and operation portion 137a is rotated so as to move valve member 137 outward from center section 136, i.e., move switching valve 132 to its opened-valve position, thereby separating the tip of spool 137b from the valve seat of port 136b, i.e., opening port 136b. Thus, switching valve 132 is opened to allow fluid to flow through port 136b and bypass-passage 134 between first and second fluid passages 30a and 30b so as to bypass hydraulic pump 21.

Second bypass means 118 includes a bypass-passage 135 and a manual switching valve 133. A horizontal fluid hole serving as bypass-passage 135 is bored in a lower portion of center section 136 and is opened to first and third fluid passages 30a and 30c. Switching valve 133 is interposed between bypass-passage 135 and third fluid passage 30c. With respect to switching valve 133, a vertical valve hole 136c is bored in center section 136 so as to extend downward from third fluid passage 30c, and is opened outward at a bottom surface of center section 136. A valve casing 138 is fitted into valve hole 136a. An annular groove 138a is formed on an outer peripheral surface of valve casing 138 in valve hole 136c and faces the end opening of bypass-passage 135. Radial ports (not shown) are bored in valve casing 138 between annular groove 138a and a vertical axial hole of valve casing 138. Valve casing 138 is formed with a top port 138b, which is extended upward from the axial hole of valve casing 138 and is opened upward to third fluid passage 30c thereabove. A step is formed in valve casing 138 between the axial hole and top port 138b so as to serve as a valve seat to be fitted to a later-discussed valve member 139.

Valve member 139 is screwed into valve casing 138, and a nut 140 is screwed on an outer portion of valve member 139 projecting downward from a bottom end of valve casing 138, so as to fasten valve member 139 together with valve casing 138 to center section 136. A lower half portion of valve member 139 is threaded so as to serve as an operation portion 139a, and the remaining upper half portion of valve member 139 is extended vertically upward so as to serve as a spool 139b. Operation portion 139a is screwed and fitted to a tapped inner peripheral surface of valve casing 138. Spool 139b is extended upward in the axial hole of valve casing 138 below port 138b.

Normally, a top of spool 139b is fitted to the valve seat between port 138b and the axial hole of valve casing 138, and an outer peripheral surface of spool 139b closes the radial port opened to annular groove 138a, thereby closing bypass-passage 135 from third first fluid passage 30c, i.e., closing switching valve 133. Nut 140 is screwed up to fasten valve member 139 together with valve casing 138 to center section 136, so as to retain switching valve 133 at its closed-valve position.

When fluid has to bypass rear hydraulic motor 22 between first and third fluid passages 30a and 30c, nut 140 is loosened, and operation portion 139a is rotated so as to move valve member 139 downward, i.e., to move switching valve 133 to its opened-valve position, thereby separating the tip of spool 139b from the valve seat at the bottom of port 138b, whereby port 138b opened to third fluid passage 30c is opened to the axial hole of valve casing 138 below port 138b. Further, spool 139b is moved downward so as to open the radial port between the axial hole of valve casing 138 and annular groove 138a, thereby opening the axial hole of valve casing 138 to bypass-passage 135 through annular groove 138a. In this way, switching valve 133 is opened to allow fluid to flow through bypass-passage 135 between first and third fluid passages 30a and 30c so as to bypass rear hydraulic motor 22.

When vehicle 1 has to be towed, nuts 140 are loosened from respective valve members 137 and 139 so as to open switching valves 132 and 133 of first and second bypass means 117 and 118, thereby allowing fluid to bypass hydraulic pump 21 between first and second fluid passages 30a and 30b, and allowing fluid to bypass hydraulic motor 22 between first and third fluid passages 30a and 30c, and thereby ensuring free rotatability of rear and front wheels 4 and 5.

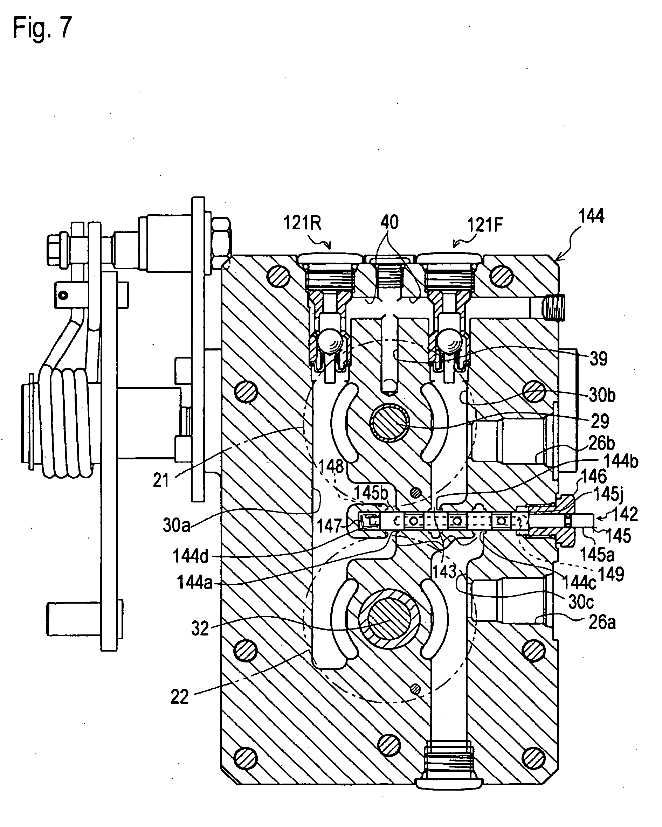

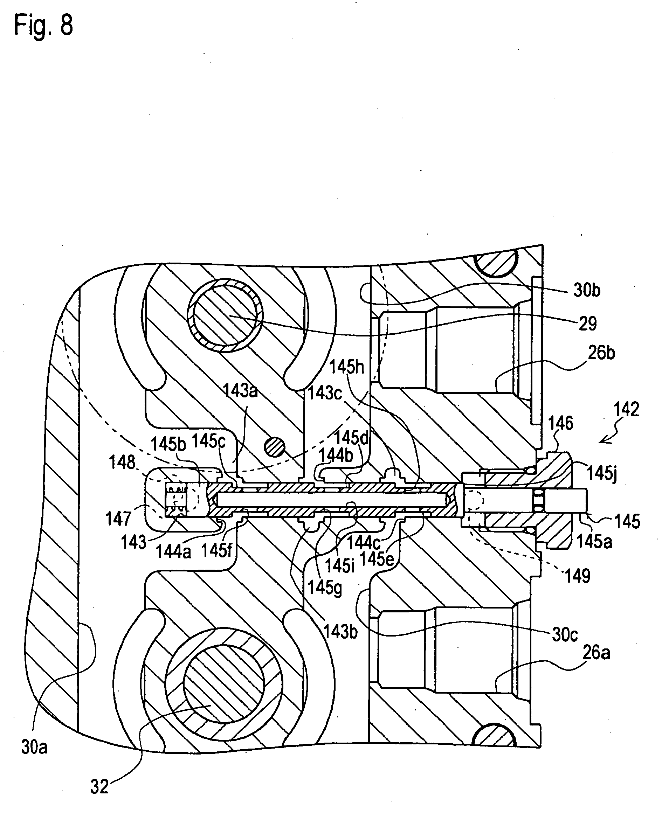

A third hydrostatic transmission apparatus 103 serving as rear transaxle 9 in vehicle 1 will be described with reference to Figs. 7 to 9. Description of the same members and parts designated by the same reference numerals as those of first and second hydrostatic transmission apparatuses 101 and 102 is omitted. Only distinctive features of third hydrostatic transmission apparatus 103 from first and second hydrostatic transmission apparatuses 101 and 102 will be described.

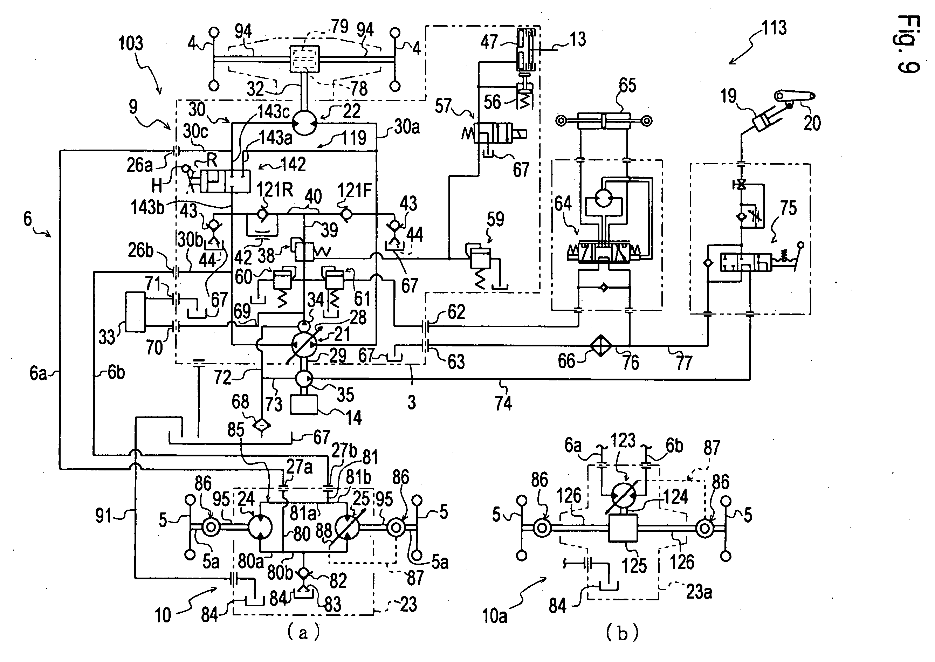

A different point of a third hydraulic circuit 113 shown in Fig. 9 from hydraulic circuits 111 and 112 shown in Figs. 3 and 6 is a bypass unit 119 in third hydrostatic transmission apparatus 103 serving as rear transaxle 9. Third hydrostatic transmission apparatus 103 serving as rear transaxle 9 is provided with an alternative center section 144. Charge check valves 121 F and 121 R without pushpins for forcibly opening the valves (i.e., having no bypass function) are fitted into center section 144 similar to those fitted into center section 136.

Bypass unit 119 serves as a single unit in which the first bypass means for allowing fluid to bypass hydraulic pump 21 between first and second fluid passages 30a and 30b and the second bypass means for allowing fluid to bypass rear hydraulic motor 22 between first and third fluid passages 30a and 30c are assembled together. Bypass means 119 includes a three-port and two-position switching valve serving as a bypass valve 142. In this regard, a horizontal valve hole 143 is bored in a vertical middle portion of center section 144. Bypass-passages 143a, 143b and 143c are bored in center section 144. Bypass-passage 143a is extended laterally toward second and third fluid passages 30b and 30c from a vertical middle portion of first fluid passage 30a, and is connected at a port 144a to valve hole 143. Bypass-passage 143b is extended downward from second fluid passage 30b and is connected at a port 144b to valve hole 143. Bypass-passage 143c is extended upward from third fluid passage 30c and is connected at a port 144c to valve hole 143. Valve hole 143 is further extended horizontally outward from port 143c so as to have a tapped outward opening on a side surface of center section 144.

Bypass valve 142 includes a horizontal shaft-shaped valve member 145. An outward portion of valve member 145 is formed as a slide operation portion 145a. A bolt cap 146 is screwed and fitted into the tapped opening of valve hole 143. Slide operation portion 145a of valve member 145 is axially slidably passed through bolt cap 146. An outer end portion of slide operation portion 145a projects outward from bolt cap 146 so as to serve as a pushpin. An inward end of slide operation portion 145a is stepped so as to form a shoulder 145j. The remaining inward portion of valve member 145 is diametrically larger than slide operation portion 145a, and is extended inward from shoulder 145j so as to serve as a spool 145b axially slidably fitted in valve hole 143. In valve hole 143, spool 145b is formed on an outer peripheral surface thereof with annular grooves 145c, 145d and 145e corresponding to respective ports 144a, 144b and 144c. A horizontal axial hole 145i is bored in spool 145b. Radial ports 145f are extended from axial hole 145i to annular groove 145c, radial ports 145g are extended from axial hole 145i to annular groove 145d, and radial ports 145h are extended from axial hole 145i to annular groove 145e.

Valve hole 143 has a closed inner end, and a compressed spring 147 is interposed between the closed inner end of valve hole 143 and an inner tip of spool 145b in valve hole 143 so as to bias valve member 145 outward. Further, valve hole 143 has an opening 148 adjacent to the closed inner end thereof, and has an opening 149 adjacent to an inner end of bolt cap 146. Openings 148 and 149 are opened to fluid sump 67, so as to smoothly supply and drain fluid into and from valve hole 143, thereby smoothening the slide of spool 145b.

Normally, due to the force of spring 147, bypass valve 142 is set at its closed-valve position H, where shoulder 145j abuts against an inner end of bolt cap 146. In this state, spool 145b is disposed so that annular groove 145c is disposed between ports 144a and 144b, annular groove 145d is disposed between ports 144b and 144c, and annular groove 145e is disposed between port 144c and bolt cap 146. Thus, the outer peripheral surface of spool 145b closes ports 144a, 144b and 144c, thereby separating bypass-passages 143a, 143b and 143c from one another.

When the pushpin serving as the outer end of slide operation portion 145a of valve member 145 is pushed inward against spring 147, spool 145b is disposed so that annular groove 145c is opened to port 144a, annular groove 145d is opened to port 144b, and annular groove 145e is opened to port 144c. Thus, bypass-passages 143a, 143b and 143c are opened to one another through axial hole 145i. This state is defined as an opened-valve position R of bypass valve 142. In this state, bypass-passages 143a and 143b and the fluid passage in spool 145b between annular grooves 145c and 145d through axial hole 145i serve as the first bypass means allowing fluid to bypass hydraulic pump 21 between first and second fluid passages 30a and 30b. Simultaneously, bypass-passages 143a and 143c and the fluid passage in spool 145b between annular grooves 145c and 145e through axial hole 145i serve as the second bypass means allowing fluid to bypass rear hydraulic motor 22 between first and third fluid passages 30a and 30c. Further, when bypass valve 142 is set at opened-valve position R, bypass-passages 143a and 143c are opened to each other through the fluid passage in spool 145b between annular grooves 145d and 145e through axial hole 145i, so that bypass valve 142 allows fluid to bypass hydraulic motors 24 and 25 between second and third fluid passages 30b and 30c. Therefore, only by pushing slide operation portion 145a, fluid passages 30a, 30b and 30c are simultaneously connected to one another through bypass-passages 143a, 143b and 143c, thereby easily and quickly ensuring free rotation of rear and front wheels 4 and 5 during towing of vehicle 1.

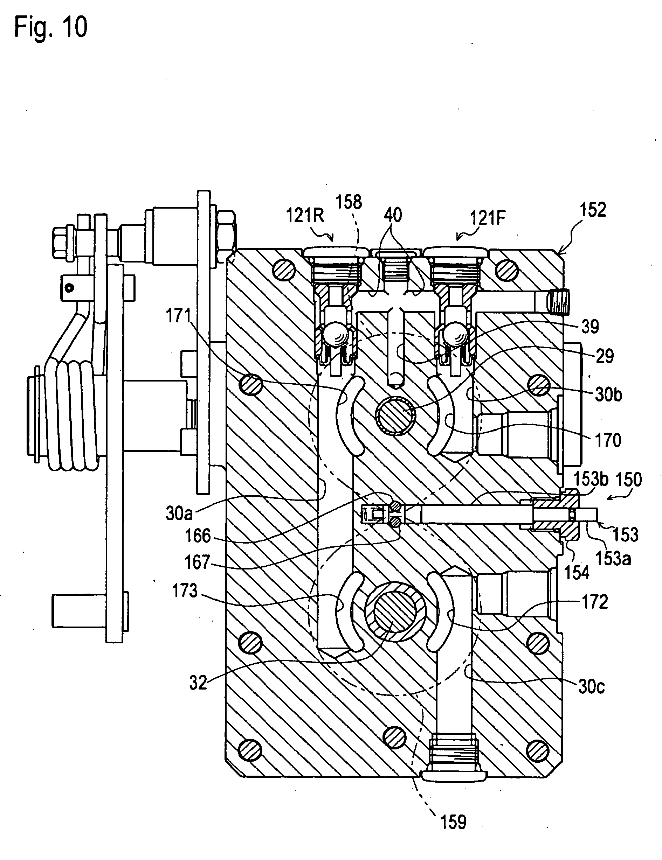

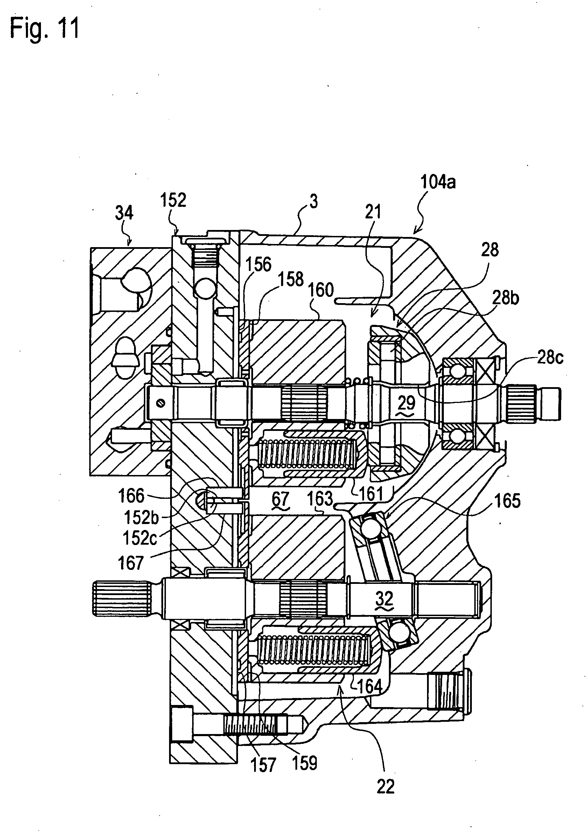

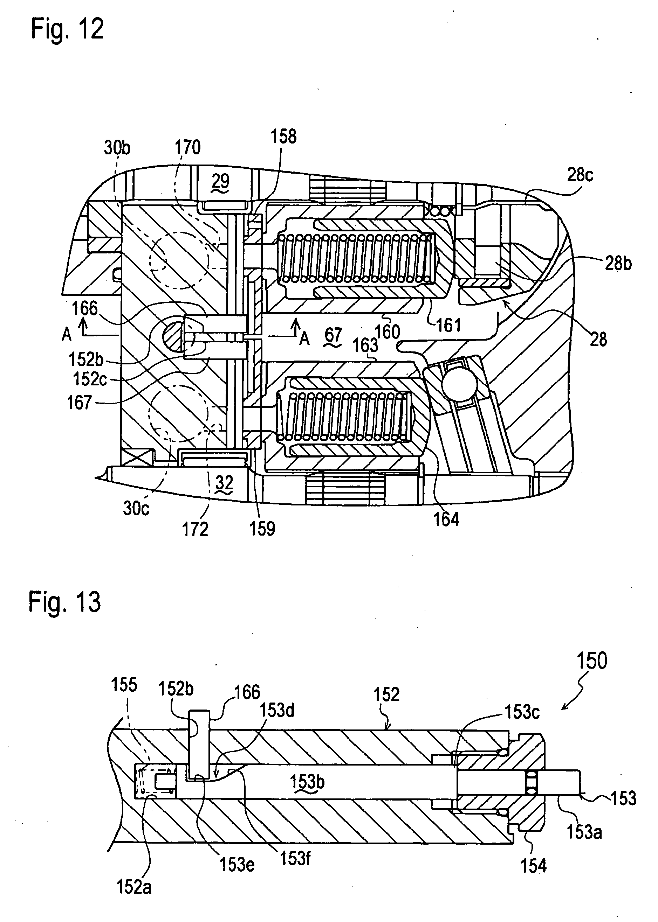

A fourth hydrostatic transmission apparatus 104 serving as rear transaxle 9 in vehicle 1 will be described with reference to Figs. 10 to 14. Description of the same members and parts designated by the same reference numerals as those of first to third hydrostatic transmission apparatuses 101, 102 and 103 is omitted. Only distinctive features of fourth hydrostatic transmission apparatus 104 from first to third hydrostatic transmission apparatuses 101, 102 and 103 will be described.

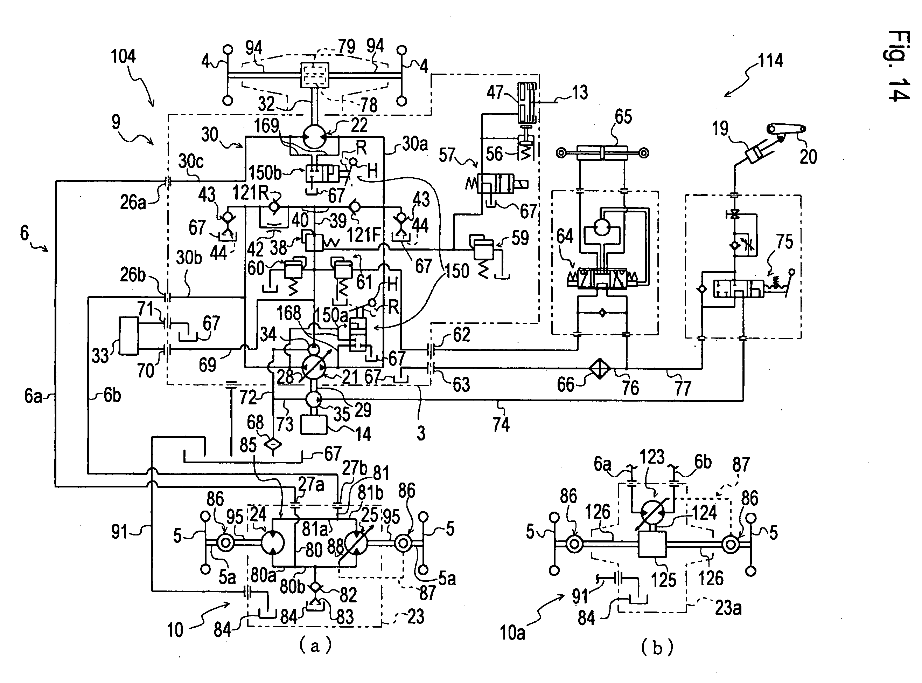

A different point of a fourth hydraulic circuit 114 shown in Fig. 14 from hydraulic circuits 111, 112 and 113 shown in Figs. 3, 6 and 9 is assembly of first and second bypass valves 150a and 150b in a bypass valve unit 150 provided in fourth hydrostatic transmission apparatus 104 serving as rear transaxle 9. Fourth hydrostatic transmission apparatus 104 serving as rear transaxle 9 is provided with an alternative center section 152. Charge check valves 121 F and 121 R without pushpins for forcibly opening the valves (i.e., having no bypass function) are fitted into center section 152 similar to those fitted into center section 136 or 144.

In comparison with the bypassing function of the foregoing bypass means within the corresponding center section, the different function of bypass valves 150a and 150b is to bypass fluid outside of center section 152. For convenience to description of structure and function of bypass valve unit 150, hydraulic pump 21 and motor 22 mounted on center section 152 will be detailed. A vertical surface of center section 152 is formed with an upper pump mount surface 156 and a lower motor mount surface 157. An upper valve plate 158 of hydraulic pump 21 is fixed onto pump mount surface 156 of center section 152, and a lower valve plate 159 of rear hydraulic motor 22 is fixed onto motor mount surface 157.

To constitute hydraulic pump 21, a cylinder block 160 is slidably rotatably fitted to valve plate 158 and relatively unrotatably fitted on axial pump (input) shaft 29, and pistons 161 are reciprocally fitted into cylinder block 160 around pump shaft 29. Movable swash plate 28 rotatably supported by casing 3 includes a thrust bearing 28b pressed against heads of pistons 161, and pump shaft 29 is freely rotatably passed through a center hole 28c of movable swash plate 28 and projects outward from casing 3 so as to serve as the input shaft to be drivingly connected to engine 14.

To constitute rear hydraulic motor 22, a cylinder block 163 is slidably rotatably fitted to valve plate 159 and relatively unrotatably fitted on axial motor shaft 32, and pistons 164 are reciprocally fitted into cylinder block 163 around motor shaft 32. A fixed swash plate 165 is fixedly supported by casing 3 so as to press against heads of pistons 164.

A pair of kidney ports 170 and 171 are opened at pump mount surface 156. Hydraulic pump 21 is opened to first fluid passage 30a through kidney port 171, and is opened to second fluid passage 30b through kidney port 170. A pair of kidney ports 172 and 173 are opened at motor mount surface 157. Hydraulic motor 22 is opened to first fluid passage 30a through kidney port 173, and is opened to third fluid passage 30c through kidney port 172.

A horizontal valve hole 152a is bored into center section 152 between second and third fluid passages 30b and 30c so as to extend toward first fluid passage 30a. Bypass valve unit 150 includes a horizontal shaft-shaped valve member 153. An outward portion of valve member 153 is formed as a slide operation portion 153a. A bolt cap 154 is screwed and fitted into the tapped opening of valve hole 152a. Slide operation portion 153a of valve member 153 is axially slidably passed through bolt cap 154. An outer end portion of slide operation portion 153a projects outward from bolt cap 154 so as to serve as a pushpin. An inward end of slide operation portion 153a is stepped so as to form a shoulder 153c. The remaining inward portion of valve member 153 is diametrically larger than slide operation portion 153a, and is extended inward from shoulder 153c so as to serve as a spool 153b axially slidably fitted in valve hole 152a. In valve hole 152a, spool 153b is formed with a notch 153d. Notch 153d includes a horizontal flat surface 153e and a slope 153f gradually rising from flat surface 153e.

Upper and lower horizontal pushpins 166 and 167 serving as first and second bypass valves 150a and 150b are axially slidably fitted in center section 152 so as to abut against spool 153b of valve member 153. Valve hole 152a has a closed inner end, and a compressed spring 155 is interposed between the closed inner end of valve hole 152a and an inner tip of spool 153b in valve hole 152a so as to bias valve member 153 outward.

Normally, due to the force of spring 155, bypass valve unit 150 is set at its closed-valve position H, where shoulder 153c abuts against an inner end of bolt cap 154. In this state, spool 153b is disposed so that pushpins 166 and 167 abut against flat surface 153e so as not to project outward from respective pump and motor mount surfaces 156 and 157. Thus, valve plates 158 and 159 are tightly fitted to respective pump and motor mount surfaces 156 and 157. Kidney ports 170 and 171 are fluidly connected to each other through only hydraulic pump 21 mounted on valve plate 158, and kidney ports 172 and 173 are fluidly connected to each other through only rear hydraulic motor 22 mounted on valve plate 159.

When the pushpin serving as the outer end of slide operation portion 153a of valve member 153 is pushed inward against spring 155, spool 153b is disposed so that pushpins 166 and 167 abut against slope 153f and project outward from pump and motor mount surfaces 156 and 157 of center section 152 so as to push respective valve plates 158 and 159 away from respective pump and motor mount surfaces 156 and 157. Thus, kidney ports 170 and 171 are fluidly connected to each other through a gap (serving as a bypass-passage 168 shown in Fig. 14) between valve plate 158 and pump mount surface 156, i.e., through fluid sump 67. In other words, fluid bypasses hydraulic pump 21 between first and second fluid passages 30a and 30b. Simultaneously, kidney ports 172 and 173 are fluidly connected to each other through a gap (serving as a bypass-passage 169 shown in Fig. 14) between valve plate 159 and motor mount surface 157, i.e., through fluid sump 67. In other words, fluid bypasses rear hydraulic motor 22 between first and third fluid passages 30a and 30c. Further, fluid passages 30a, 30b and 30c are opened to fluid sump 67.

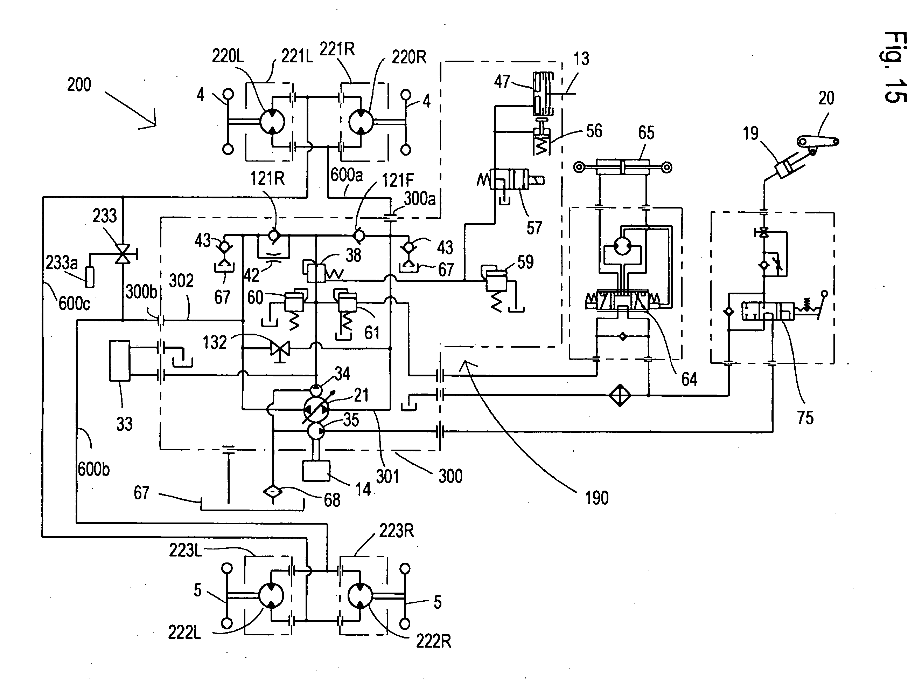

Referring to Fig. 15, a fifth hydraulic circuit 200 for driving vehicle 1, including a fifth hydrostatic transmission apparatus 190, will be described. Description of the same members and parts designated by the same reference numerals as those of hydraulic circuits 111 to 114 is omitted. Only distinctive features of hydraulic circuit 200 from hydraulic circuits 111 to 114 will be described.

Fifth hydrostatic transmission apparatus 190 includes a casing 300 incorporating hydraulic pump 21. A pair of left and right rear transaxles 221 L and 221 R are disposed outside of casing 300 of hydrostatic transmission apparatus 190. Left rear transaxles 221 L incorporates a left rear hydraulic motor 220L and supports left rear wheel 4 driven by left rear hydraulic motor 220L. Right rear transaxles 221 R incorporates a right rear hydraulic motor 220R and supports right rear wheel 4 driven by right rear hydraulic motor 220R. A pair of left and right front transaxles 223L and 223R are disposed outside of casing 300 of hydrostatic transmission apparatus 190. Left front transaxles 223L incorporates a left front hydraulic motor 222L and supports left front wheel 5 driven by left front hydraulic motor 222L. Right front transaxles 223R incorporates a right front hydraulic motor 222R and supports right front wheel 5 driven by right front hydraulic motor 222R. Each of transaxles 221 L, 221 R, 223L and 223R may incorporate a deceleration drive train interposed between the corresponding hydraulic motor 220L, 220R, 222L or 222R and the corresponding rear or front wheel 4 or 5.

In casing 300 of hydrostatic transmission apparatus 190, a fluid passage 301 is extended from hydraulic pump 21 to an outward opened port 300a, and a fluid passage 302 is extended from hydraulic pump 21 to an outward opened port 300b. An external pipe 600a is extended outward from port 300a, and is bifurcated so as to be fluidly connected to hydraulic motors 220L and 220R. The pair of rear hydraulic motors 220L and 220R correspond to rear hydraulic motor 22. In this way, fluid passage 301 and pipe 600a are extended between hydraulic pump 21 and the pair of hydraulic motors 220L and 220R so as to correspond to first fluid passage 30a between hydraulic pump 21 and motor 22.

An external pipe 600b is extended outward from port 300b, and is bifurcated so as to be fluidly connected to hydraulic motors 222L and 222R. The pair of front hydraulic motors 222L and 222R correspond to the pair of front hydraulic motors 24 and 25. In this way, fluid passage 302 and pipe 600b are extended between hydraulic pump 21 and the pair of hydraulic motors 222L and 222R so as to correspond to second fluid passage 30b and pipe 6b between hydraulic pump 21 and the pair of hydraulic motors 24 and 25.

An external pipe 600c is extended between the pair of rear transaxles 221 L and 221 R and the pair of front transaxles 223L and 223R. External pipe 600c is bifurcated at one end thereof so as to be fluidly connected to rear hydraulic motors 220L and 220R. External pipe 600c is bifurcated at the other end thereof so as to be fluidly connected to front hydraulic motors 222L and 222R. External pipe 600c corresponds to third fluid passage 30c and pipe 6a between hydraulic motor 22 and the pair of hydraulic motors 24 and 25. In this way, a closed fluid circuit is configured so as to fluidly connect the pair of rear hydraulic motors 220L and 220R and the pair of front hydraulic motors 222L and 222R in series to hydraulic pump 21, to fluidly connect rear hydraulic motors 220L and 220R in parallel to hydraulic pump 21, and to fluidly connect front hydraulic motors 222L and 222R in parallel to hydraulic pump 21.

In casing 300 of hydrostatic transmission apparatus 190, switching valve 132 is interposed between fluid passages 301 and 302 so as to serve as the first bypass means for allowing fluid to bypass hydraulic pump 21 between fluid passages 301 and 302. Outside of casing 300 of hydrostatic transmission apparatus 190, a switching valve 233 is interposed between pipes 600b and 600c so as to serve as the second bypass means for allowing fluid to bypass the pair of hydraulic motors 220L and 220R between pipes 600b and 600c.

A quick coupler 233a is connected to switching valve 233. After hydrostatic transmission apparatus 190 and four transaxles 221 L, 221 R, 223L and 223R are assembled into a vehicle in a factory, a fluid supply pipe is connected to quick coupler 233a, so as to easily and quickly open switching valve 223 to the fluid supply pipe. Thus, fluid can be swiftly supplied to the closed fluid circuit.

It is further understood by those skilled in the art that the foregoing descriptions are preferred embodiments of the disclosed apparatuses and that various changes and modifications may be made in the invention without departing from the scope thereof defined by the following claims.

## Claims

1. A hydrostatic transmission apparatus comprising:
a housing (3);
a hydraulic pump (21) disposed in the housing (3) so as to be driven by a prime mover (14);
a first hydraulic motor (22) disposed in the housing;
a first port (26b) provided on the housing (3) and opened outward from the housing (3);
a first fluid passage (30a) disposed in the housing (3) and interposed between the hydraulic pump (21) and the first hydraulic motor (22);
a second port (26a) provided on the housing (3) and opened outward from the housing (3);
a second fluid passage (30b) disposed in the housing (3) and extended from the hydraulic pump (21) to the first port (26b), wherein the first and second ports (26b, 26a) are adapted to be fluidly connected to a second hydraulic motor (24, 25) disposed outside of the housing (3) so as to constitute a closed fluid circuit fluidly connecting the first and second hydraulic motors (22, 24, 25) in series to the hydraulic pump (21);
a third fluid passage (30c) disposed in the housing (3) and extended from the first hydraulic motor (22) to the second port (26a); and
a first bypass means (115, 117, 119, 150a) for allowing fluid to bypass the hydraulic pump (21) between the first and second fluid passages (30a, 30b),
**characterized by**:
a second bypass means (116, 118, 119, 150b) for allowing fluid to bypass the first hydraulic motor (22) between the first and third fluid passages (30a, 30c).

2. The hydrostatic transmission apparatus according to claim 1, further comprising:
a first axle (94) driven by the first hydraulic motor (21), wherein a second axle (5a) is disposed outside of the housing (3), and wherein the second hydraulic motor (24, 25) is adapted to drive the second axle (5a).

3. The hydrostatic transmission apparatus according to claim 1, wherein the first bypass means (115) includes a check valve (41F, 41R) for allowing fluid to be charged to the closed fluid circuit, and for allowing fluid to bypass the hydraulic pump (21) between the first and second fluid passages (30a, 30b).

4. The hydrostatic transmission apparatus according to claim 1, wherein the first bypass means (117) includes a first bypass-passage (134) interposed between the first and second fluid passages (30a, 30b) so as to bypass the hydraulic pump (21), and includes a first switching valve (132) for selectively opening or closing the first bypass-passage (134), and wherein the second bypass means (118) includes a second bypass-passage (135) interposed between the first and third fluid passages (30a, 30c) so as to bypass the first hydraulic motor (22), and includes a second switching valve (133) for selectively opening or closing the second bypass-passage (135).

5. The hydrostatic transmission apparatus according to claim 1, wherein at least one of the first and second bypass means can drain bypassed fluid to a fluid sump (67) in the housing (3).

6. The hydrostatic transmission apparatus according to claim 1, further comprising:
a single bypass unit (119) disposed in the housing, wherein the first and second bypass means are assembled together in the single bypass unit (119) so as to be simultaneously switched for allowing fluid to bypass the hydraulic pump (21) between the first and second fluid passages (30a, 30b) and bypass the first hydraulic motor (22) between the first and third fluid passages (30a, 30c).

## Patentansprüche

1. Hydrostatische Getriebevorrichtung, die umfasst:
ein Gehäuse (3);
eine Hydraulikpumpe (21), die in der Weise in dem Gehäuse (3) angeordnet ist, dass sie durch eine Antriebsmaschine (14) angetrieben wird;
einen ersten Hydraulikmotor (22), der in dem Gehäuse angeordnet ist;
einen ersten Anschluss (26b), der an dem Gehäuse (3) vorgesehen ist und der von dem Gehäuse (3) nach außen geöffnet ist;
einen ersten Fluiddurchlass (30a), der in dem Gehäuse (3) angeordnet ist und der zwischen der Hydraulikpumpe (21) und dem ersten Hydraulikmotor (22) eingefügt ist;
einen zweiten Anschluss (26a), der an dem Gehäuse (3) vorgesehen ist und der von dem Gehäuse (3) nach außen geöffnet ist,
einen zweiten Fluiddurchlass (30b), der in dem Gehäuse (3) angeordnet ist und der von der Hydraulikpumpe (21) zu dem ersten Anschluss (26b) verläuft, wobei der erste und der zweiten Anschluss (26b, 26a) so ausgelegt sind, dass sie mit einem zweiten Hydraulikmotor (24, 25), der außerhalb des Gehäuses (3) angeordnet ist, in der Weise für Fluid verbunden sind, dass sie einen geschlossenen Fluidkreis bilden, der den ersten und den zweiten Hydraulikmotor (22, 24, 25) mit der Hydraulikpumpe (21) für Fluid in Reihe schaltet;
einen dritten Fluiddurchlass (30c), der in dem Gehäuse (3) angeordnet ist und der von dem ersten Hydraulikmotor (22) zu dem zweiten Anschluss (26a) verläuft; und
ein erstes Umgehungsmittel (115, 117, 119, 150a), um zu ermöglichen, dass Fluid die Hydraulikpumpe (21) zwischen dem ersten und dem zweiten Fluiddurchlass (30a, 30b) umgeht,
**gekennzeichnet durch**
ein zweites Umgehungsmittel (116, 118, 119, 150b), um zu ermöglichen, das Fluid den ersten Hydraulikmotor (22) zwischen dem ersten und dem dritten Fluiddurchlass (30a, 30c) umgeht.

2. Hydrostatische Getriebevorrichtung nach Anspruch 1, die ferner umfasst:
eine erste Achse (94), die durch den ersten Hydraulikmotor (21) angetrieben wird, wobei außerhalb des Gehäuses (3) eine zweite Achse (5a) angeordnet ist und wobei der zweite Hydraulikmotor (24, 25) so ausgelegt ist, dass er die zweite Achse (5a) antreibt.

3. Hydrostatische Getriebevorrichtung nach Anspruch 1, bei der das erste Umgehungsmittel (115) ein Rückschlagventil (41F, 41R) enthält, um zu ermöglichen, dass Fluid in den geschlossenen Fluidkreis gefüllt wird, und um zu ermöglichen, dass Fluid die Hydraulikpumpe (21) zwischen dem ersten und dem zweiten Fluiddurchlass (30a, 30b) umgeht.

4. Hydrostatische Getriebevorrichtung nach Anspruch 1, bei der das erste Umgehungsmittel (117) einen ersten Umgehungsdurchlass (134) enthält, der in der Weise zwischen dem ersten und dem zweiten Fluiddurchlass (30a, 30b) eingefügt ist, dass er die Hydraulikpumpe (21) umgeht, und ein erstes Schaltventil (132) enthält, um den ersten Umgehungsdurchlass (134) wahlweise zu öffnen oder zu schließen, und bei der das zweite Umgehungsmittel (118) einen zweiten Umgehungsdurchlass (135) enthält, der in der Weise zwischen dem ersten und dem dritten Fluiddurchlass (30a, 30c) eingefügt ist, dass er den ersten Hydraulikmotor (22) umgeht, und ein zweites Schaltventil (133) enthält, um den zweiten Umgehungsdurchlass (135) wahlweise zu öffnen oder zu schießen.

5. Hydrostatische Getriebevorrichtung nach Anspruch 1, bei der das erste und/oder das zweite Umgehungsmittel umgeleitetes Fluid in eine Fluidwanne (67) in dem Gehäuse (3) ablassen kann/können.

6. Hydrostatische Getriebevorrichtung nach Anspruch 1, die ferner umfasst:
eine einzelne Umgehungseinheit (119), die in dem Gehäuse angeordnet ist, wobei das erste und das zweite Umgehungsmittel in der einzelnen Umgehungseinheit (119) in der Weise miteinander zusammengesetzt sind, dass sie gleichzeitig geschaltet werden, um zu ermöglichen, dass Fluid die Hydraulikpumpe (21) zwischen dem ersten und dem zweiten Fluiddurchlass (30a, 30b) umgeht und den ersten Hydraulikmotor (22) zwischen dem ersten und dem dritten Fluiddurchlass (30a, 30c) umgeht.

## Revendications

1. Appareil de transmission hydrostatique comprenant :
un carter (3) ;
une pompe hydraulique (21) disposée dans le carter (3) de manière à être entraînée par un moteur d'entraînement (14) ;
un premier moteur hydraulique (22) disposé dans le carter ;
un premier port (26b) prévu sur le carter (3) et ouvert vers l'extérieur depuis le carter (3) ;
un premier passage de fluide (30a) disposé dans le carter (3) et interposé entre la pompe hydraulique (21) et le premier moteur hydraulique (22) ;
un second port (26a) prévu sur le carter (3) et ouvert vers l'extérieur depuis le carter (3) ;
un deuxième passage de fluide (30b) disposé dans le carter (3) et qui s'étend depuis la pompe hydraulique (21) vers le premier port (26b), dans lequel les premier et second ports (26b, 26a) sont adaptés à être connectés par voie fluidique à un second moteur hydraulique (24, 25) disposé en dehors du carter (3) de manière à constituer un circuit fluidique fermé connectant par voie fluidique les premier et second moteurs hydrauliques (22, 24, 25) en série à la pompe hydraulique (21) ;
un troisième passage de fluide (30c) disposé dans le carter (3) et qui s'étend depuis le premier moteur hydraulique (22) vers le second port (26a) ; et
un premier moyen de dérivation (115, 117, 119, 150a) pour permettre au fluide d'éviter la pompe hydraulique (21) entre les premier et deuxième passages de fluide (30a, 30b),
**caractérisé par** :
un second moyen de dérivation (116, 118, 119, 150b) pour permettre au fluide d'éviter le premier moteur hydraulique (22) entre les premier et troisième passages de fluide (30a, 30c).

2. Appareil de transmission hydrostatique selon la revendication 1, comprenant en outre :
un premier essieu (94) entraîné par le premier moteur hydraulique (21), dans lequel un second essieu (5a) est disposé en dehors du carter (3) et dans lequel le second moteur hydraulique (24, 25) est adapté pour entraîner le second essieu (5a).

3. Appareil de transmission hydrostatique selon la revendication 1, dans lequel le premier moyen de dérivation (115) comprend une soupape anti-retour (41F, 41R) pour permettre au fluide d'être chargé vers le circuit fluidique fermé et pour permettre au fluide d'éviter la pompe hydraulique (21) entre les premier et deuxième passages de fluide (30a, 30b).

4. Appareil de transmission hydrostatique selon la revendication 1, dans lequel le premier moyen de dérivation (117) comprend un premier passage de dérivation (134) interposé entre les premier et deuxième passages de fluide (30a, 30b) de manière à éviter la pompe hydraulique (21) et comprend une première soupape de commutation (132) pour ouvrir ou fermer sélectivement le premier passage de dérivation (134), et dans lequel le second moyen de dérivation (118) comprend un second passage de dérivation (135) interposé entre les premier et troisième passages de fluide (30a, 30c) de manière à éviter le premier moteur hydraulique (22) et comprend une seconde soupape de commutation (133) pour ouvrir ou fermer sélectivement le second passage de dérivation (135).

5. Appareil de transmission hydrostatique selon la revendication 1, dans lequel au moins un des premier et second moyens de dérivation peut évacuer du fluide dérivé vers un puits collecteur de fluide (67) dans le carter (3).

6. Appareil de transmission hydrostatique selon la revendication 1, comprenant en outre :
un module de dérivation unique (119) disposé dans le carter, dans lequel les premier et second moyens de dérivation sont rassemblés ensemble dans le module de dérivation unique (119) de manière à être commutés simultanément pour permettre au fluide d'éviter la pompe hydraulique (21) entre les premier et second passages de fluide (30a, 30b) et d'éviter le premier moteur hydraulique (22) entre les premier et troisième passages de fluide (30a, 30c).
